# EUROPÄISCHE PATENTSCHRIFT

(11) **EP 3 354 126 B1**
(45) Veröffentlichungstag und Bekanntmachung des Hinweises auf die Patenterteilung: **23.09.2020**
(21) Anmeldenummer: 18152942.1
(22) Anmeldetag: 23.01.2018
(51) Int. Cl.: A01F 29/09, A01D 34/73

(54) **HÄCKSELMUND UND HÄCKSELTROMMEL FÜR EINEN FELDHÄCKSLER**
CUTTER AND SHREDDING DRUM FOR A CHAFF CUTTER
COUTEAU ET TAMBOUR DE HACHOIR POUR UNE RAMASSEUSE-HACHEUSE

(30) Priorität: 25.01.2017 DE 102017201160
(43) Veröffentlichungstag der Anmeldung: 01.08.2018
(73) Patentinhaber: Deere & Company, Moline, IL 61265 (US)
(72) Erfinder: Stein, Matthias, 68163 Mannheim (DE); Linde, Johannes, 68163 Mannheim (DE)
(74) Vertreter: Holst, Sönke

(56) Entgegenhaltungen:
- EP-A1- 2 332 404
- DE-A1- 19 704 278
- DE-A1- 19 704 278

## Beschreibung

Die Erfindung betrifft eine Häckseltrommel für einen Feldhäcksler nach dem Oberbegriff des Anspruchs 1 und einen damit ausgestatteten Feldhäcksler.

### Stand der Technik

Feldhäcksler dienen dazu, Pflanzen oder deren Fruchtstände von einem Feld aufzunehmen und in kleine Teile zu zerschneiden. Die auf dem Feld stehenden Pflanzen werden üblicherweise mittels eines geeigneten Erntevorsatzes von dem im Boden verbleibenden Wurzeln abgeschnitten und einem Einzugskanal des Feldhäckslers zugeführt. Alternativ können die Pflanzen in vorigen Arbeitsgängen abgeschnitten und geschwadet worden und mittels eines Aufnehmers aufgenommen werden, oder es werden nur die Fruchtstände von den Pflanzen abgetrennt und in den Einzugskanal gefördert. Im Einzugskanal erfolgt eine Vorverdichtung der mittels des Erntevorsatzes aufgenommenen Erntegutmatte durch zusammenwirkende, gegeneinander vorgespannte Vorpresswalzenpaare, welche die Erntegutmatte einer Häckseltrommel zuführen, um deren Umfang (und ggf. über deren Breite) eine Anzahl an Häckselmessern verteilt ist. Die Häckselmesser schneiden das Erntegut im Zusammenwirken mit einer Gegenschneide in kleine Stücke. Das zerkleinerte Erntegut (und insbesondere darin enthaltene Maiskörner) wird optional mittels einer Nachbearbeitungseinrichtung noch weiter zerkleinert, mittels eines Nachbeschleunigers in einen Auswurfkrümmer gefördert und auf ein Transportfahrzeug überladen. Das gehäckselte Erntegut dient insbesondere als Futter für Vieh oder zur Biogaserzeugung.

Die Häckseltrommel kann als geschlossener Mantel oder offene Tragkonstruktion ausgeführt sein. Die Häckseltrommel haltert eine Anzahl an Messerhaltern, an denen die einzelnen Häckselmesser angeschraubt werden.

Beim Schneiden des Erntegutes ist neben der Schärfe der Häckselmesser auch der Abstand zwischen der Schneidkante der Häckselmesser und der Gegenschneide von großer Wichtigkeit, um auf energiesparende Weise ein gutes Schnittergebnis zu erzielen. Dazu werden die Häckselmesser nach ihrer Erstmontage und auch später von Zeit zu Zeit einem Schleifvorgang unterzogen, bei dem ein Schleifstein mit der rotierenden Häckseltrommel zusammenwirkt. Anschließend ist gewährleistet, dass alle Schneidkanten scharf sind und für alle Häckselmesser einen hinreichend gleichen Abstand von der Drehachse der Häckseltrommel aufweisen.

Beim Erntevorgang und beim Schleifen werden die Häckselmesser demnach zunehmend kürzer, was dazu führt, dass sie von Zeit zu Zeit auszutauschen sind. Weiterhin kann ein Wechsel der Art des zu erntenden Pflanzenmaterials (z.B. Gras bzw. Mais) einen Wechsel der an die Erntegutart angepassten Häckselmesser erfordern. Auch können einzelne Häckselmesser im Betrieb beschädigt und ausgetauscht werden müssen.

Wenn eine Neubestückung einer Häckseltrommel mit Häckselmessern ansteht, ist darauf zu achten, dass möglichst alle Häckselmesser in gleicher Position angebracht werden, d.h. keine Häckselmesser über andere nach außen hinaus ragen oder gegenüber anderen Häckselmessern nach innen versetzt sind. Derartige Unterschiede sind nämlich zeitaufwändig und unter teurem Materialverlust durch Schleifen der Häckselmesser auszugleichen. Gleiches gilt für den Fall, das ein einzelnes Häckselmesser auszutauschen ist. Die Bestückung einer Häckseltrommel mit Häckselmessern erfordert somit ein präzises Positionieren der Häckselmesser, wozu man sich auf eine optische Kontrolle verlässt oder auf eine Lehre zurückgegriffen wird, die mit einem Referenzpunkt am Gestell des Feldhäckslers zusammenwirkt, und ein anschließendes Festschrauben der Häckselmesser. Da sich die Position der Häckselmesser beim Anziehen der Schrauben noch ändert, ist dieser Vorgang mitunter mehrfach durchzuführen, bis die Position der Häckselmesser hinreichend genau eingestellt ist. Die Montage der Häckselmesser ist demnach sehr zeitaufwändig.

Bei der Verwendung eines Hilfswerkzeugs (EP 2 386 200 A1) kann zwar die Notwendigkeit zur Nachstellung der Messer entfallen, da diese bereits bei höherer Vorspannung eingestellt werden und somit ein Verrutschen der Messer beim Anziehen der Schrauben schwerer möglich ist. Die Überprüfung des resultierenden Spalts erfolgt dennoch weiterhin visuell durch den Monteur.

Im Stand der Technik wurde vorgeschlagen, zur Vereinfachung der Positionierung der Häckselmesser bei der Montage an den Messerhaltern Justierschrauben anzubringen, die an den Rückseiten der Häckselmesser anliegen (DE 70 38 523 U1, DE 1 279 415 A). Die Häckselmesser können demnach lose vormontiert und mittels der Justierschraube in eine geeignete Position gebracht werden, bevor sie schließlich endgültig festgeschraubt werden. Hier liegt jedoch immer noch das Problem vor, dass die Justierschrauben in die geeignete Position zu verbringen sind, weshalb der Bestückungsvorgang nicht wesentlich beschleunigt wird.

Weiterhin schlägt die EP 1 110 446 A1 vor, schalenförmig gebogene Häckselmesser formschlüssig am Messerhalter anzubringen, um schwächende Durchgangsbohrungen in den schalenförmigen Häckselmessern und in die durch die Häckselmesser geformte Schale eindringende, den Häckselgutfluss negativ beeinträchtigende Schraubenköpfe zu vermeiden. Die Häckselmesser werden dazu rückseitig mittels einer Schraube und eines Konus gegen den Messerhalter gedrückt und im vorderen Bereich durch einen Vorsprung oder eine Passfeder mit dem Messerhalter gekoppelt. Diese Anordnung stellt sicher, dass alle Häckselmesser automatisch die gleiche Position einnehmen, denn ein Verstellen ist aufgrund der formschlüssigen Anbringung am Messerhalter nicht möglich. Ein Nachteil liegt jedoch darin, dass bei Austausch eines Häckselmessers das neue Häckselmesser durch die Schleifeinrichtung des Feldhäckslers oder mittels eines anderen Schleifgeräts zunächst derart weit abgeschliffen werden muss, bis sein Hüllkreis mit jenem der anderen, in der Regel bereits abgenutzten Häckselmesser übereinstimmt. Dieser Vorgang ist zeitaufwändig, senkt den Gebrauchswert der neuen Messer und nutzt den Schleifstein ab. Ein weiterer Nachteil liegt darin, dass die Häckselmesser nicht in der Lage sind, im Überlastfall (z.B. bei Aufnahme eines Fremdkörpers) entgegen der Drehrichtung auszuweichen. Auch können die Häckselmesser nicht, nach gewissem Verschleiß, weiter nach außen gezogen und wieder fixiert werden, um die Luftförderwirkung der Häckselmesser zu verbessern.

Die als gattungsbildend angesehene DE 197 04 278 A1 beschreibt eine Häckseltrommel mit daran angebrachten Häckselmessern, die durch sich durch Langlöcher in den Häckselmessern erstreckende Schrauben an einem Messerhalter befestigt werden. In den Häckselmessern sind in der Nähe der beiden seitlichen Ränder Bohrungen angebracht, von denen jeweils eine Bohrung in einer ersten Montageposition und in einer zweiten, gegenüber der ersten Montageposition des Häckselmessers nach außen versetzten Montageposition des Häckselmessers mit einer Bohrung im Messerhalter fluchten, sodass Passstifte in die Bohrungen gesteckt werden können, um die Häckselmesser bei der Montage in der korrekten Position zu halten, bis die Schrauben angezogen wurden. Die Bohrungen und Passstifte sind relativ groß dimensioniert und eine Überlastfunktion wird nicht diskutiert.

Die DE 195 17 639 A1 erwähnt eine Ballenpresse mit schwenkbaren Schneidmessern, die durch Scherstifte gegen Überlastung geschützt sind.

Die EP 2 332 404 A1 zeigt eine Häckseltrommel mit höckerartigen Messerhaltern, an denen Häckselmesser angeschraubt sind. Die Schrauben erstrecken sich durch eine Deckplatte, nach hinten offene Schlitze in den Häckselmessern und in Gewinde in den Messerhaltern.

### Aufgabe

Die der Erfindung zu Grunde liegende Aufgabe wird darin gesehen, eine Anordnung zur Anbringung eines Häckselmessers an einer Häckseltrommel eines Feldhäckslers bereitzustellen, bei dem die oben erwähnten Nachteile nicht oder in einem verminderten Maße zu erwarten sind.

### Lösung

Diese Aufgabe wird erfindungsgemäß durch die Lehre der Patentansprüche 1 und 4 gelöst, wobei in den weiteren Patentansprüchen Merkmale aufgeführt sind, die die Lösung in vorteilhafter Weise weiterentwickeln.

Eine offene oder geschlossene Häckseltrommel für einen Feldhäcksler ist mit einer Anzahl um den Umfang (und ggf. über die Breite) der Häckseltrommel verteilter Messerhalter ausgestattet, an denen jeweils ein Häckselmesser wahlweise in einer von zumindest zwei unterschiedlichen, durch formschlüssige Mittel vorgegebenen Positionen fixierbar ist.

Es besteht demnach die Möglichkeit, die Häckselmesser schnell und dennoch in einer geeigneten Position zu fixieren. Selbstverständlich können auch mehr als zwei unterschiedliche Positionen durch die formschlüssigen Mittel vorgebbar sein, z.B. drei oder vier oder noch mehr.

Die formschlüssigen Mittel umfassen eine als Bohrung ausgeführte Vertiefung im Messerhalter und im Häckselmesser, in welche ein dauerhaft oder lösbar mit dem Häckselmesser oder dem Messerhalter gekoppeltes, überstehendes Element einführbar ist, bei dem es sich um einen abnehmbaren Passstift handelt. Die formschlüssige Positionsvorgabe des Häckselmessers wird demnach durch die Verwendung von Passstiften und einem oder mehreren Paaren entsprechender Bohrungen ermöglicht.

Die Passstifte sind aus Kunststoff und entsprechend dimensioniert, dass sie das Messer während der Montage stabil halten können, sodass eine Verschiebung der Häckselmesser während des Anziehens der Befestigungsschrauben nicht stattfindet, aber im Falle eines Fremdkörperereignisses oder einer anderen Überlastung abscheren und somit das Ausweichen der Häckselmesser ermöglichen, um einen Überlastschutz zu gewährleisten.

Zu diesem Zweck werden Schlitze oder Langlöcher im Häckselmesser verwendet, durch die sich die Befestigungsschrauben hindurch erstrecken. Die Verwendung von Langlöchern anstelle von nach hinten offenen Schlitzen verhindert zudem das Eintreten und Ablagern von Schmutz und so auch den Reinigungsaufwand der Messerhalter und Deckplatten. Um

Schmutzablagerungen weiter zu reduzieren, können die Langlöcher nach der Montage vollständig durch die Messerhöcker und die Deckplatten abgedeckt werden. Zudem werden die Kontaktflächen zwischen Höcker und Messer sowie Messer und Deckplatte vorzugsweise plan bearbeitet, um auch seitliches Eindringen von Schmutz zu unterbinden.

Vorzugsweise ist an beiden seitlichen Enden des Häckselmessers je ein formschlüssiges Mittel vorhanden, obwohl auch denkbar wäre, nur in der Mitte des Häckselmessers ein formschlüssiges Mittel anzubringen. Eine Fixierung des Häckselmessers gegenüber einer Drehung in seiner Ebene kann durch eine nicht-kreisförmige Form der formschlüssigen Mittel erzielt werden.

### Ausführungsbeispiel

Anhand der Abbildungen wird ein Ausführungsbeispiel der Erfindung erläutert. Es zeigen:
- Fig. 1: eine schematische seitliche Ansicht eines Feldhäckslers,
- Fig. 2: eine perspektivische Ansicht der Häckseltrommel des Feldhäckslers der Figur 1, und
- Fig. 3: eine schematische Darstellung der Anbringungsmöglichkeiten der Häckselmesser an der Häckseltrommel.

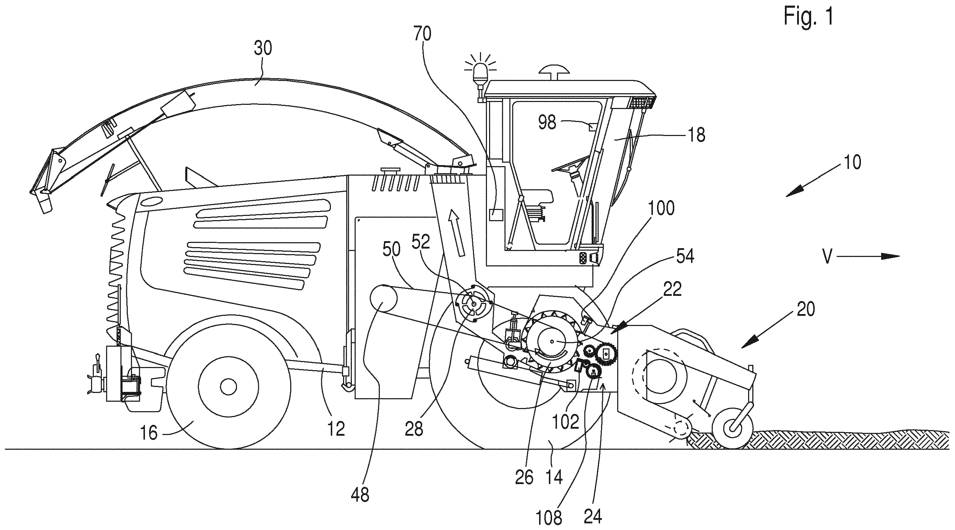

In der Figur 1 ist ein selbstfahrender Feldhäcksler 10 in schematischer Seitenansicht dargestellt. Der Feldhäcksler 10 baut sich auf einem Rahmen 12 auf, der von vorderen angetriebenen Rädern 14 und lenkbaren rückwärtigen Rädern 16 getragen wird. Die Bedienung des Feldhäckslers 10 erfolgt von einer Fahrerkabine 18 aus, von der aus ein Erntevorsatz 20 in Form eines Aufnehmers einsehbar ist. Mittels des Erntevorsatzes 20 vom Boden aufgenommenes Erntegut, z. B. Gras oder dergleichen wird über einen Einzugsförderer 22 mit Vorpresswalzen, die innerhalb eines Einzugsgehäuses 24 an der Frontseite des Feldhäckslers 10 angeordnet sind, einer unterhalb der Fahrerkabine 18 angeordneten Häckseltrommel 26 zugeführt, die es im Zusammenwirken mit einer Gegenschneide 102 in kleine Stücke häckselt und es einer Fördervorrichtung 28 aufgibt. Das Gut verlässt die Erntemaschine 10 zu einem nebenher fahrenden Transportfahrzeug über einen um eine etwa vertikale Achse drehbaren und in der Neigung verstellbaren Auswurfkrümmer 30. Im Folgenden beziehen sich Richtungsangaben, wie seitlich, unten und oben, auf die Vorwärtsrichtung V der Erntemaschine 10, die in der Figur 1 nach rechts verläuft.

Der Antrieb der Häckseltrommel 26 erfolgt ausgehend von einer Riemenscheibe 48, die über ein Winkelgetriebe mit einem Verbrennungsmotor (nicht gezeigt) verbunden ist, über einen Treibriemen 50, der eine Riemenscheibe 54 zum Antrieb der Häckseltrommel 26 und eine Riemenscheibe 52 zum Antrieb der Fördervorrichtung 28. Eine Schleifeinrichtung 100 dient zum Schleifen der Häckselmesser der Häckseltrommel 26. Zudem ist ein Metalldetektor 108 in der unteren, vorderen Vorpresswalze vorgesehen, der ggf. zum Schnellstopp des Einzugsförderers 22 dient, und eine mit einer Steuerung 70 gekoppelte Bedienereingabeeinrichtung 98 in der Fahrerkabine 18.

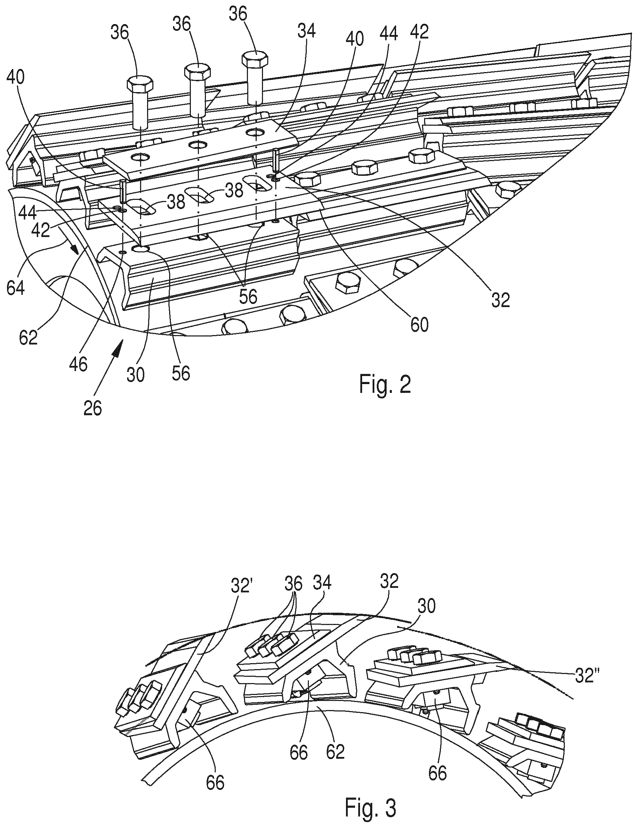

Die Figur 2 zeigt eine perspektivische Ansicht des oberen Bereichs der Häckseltrommel 26, die sich im Betrieb in Richtung des Pfeils 64 dreht. Die Häckseltrommel 26 umfasst einen geschlossenen Trommelmantel 62, der über nicht gezeigte Stirnwände und Achsstummel mit der Riemenscheibe 54 und Lagerungen verbunden ist, die ihn am Gestell 12 abstützen. Über den Umfang und die Breite des Trommelmantels 62 sind Messerhalter 30 verteilt, die jeweils einen vorlaufenden, mit dem Trommelmantel 62 verschweißten Schenkel, einen rücklaufenden, mit dem Trommelmantel 62 verschweißten Schenkel und eine sich zwischen den Schenkeln erstreckende, äußere Befestigungsfläche aufweisen, die mit drei Bohrungen oder Gewinden 56 versehen ist. Die einzelnen Häckselmesser 32 weisen jeweils eine vorlaufende Schneidkante 60 und einen Körper mit drei Langlöchern 38 auf. Oberhalb der Häckselmesser 32 sind Deckplatten 34 angeordnet, die mit drei Bohrungen versehen sind.

Die Befestigung der Häckselmesser 32 an den Messerhaltern 30 erfolgt durch drei Schrauben 36, die sich im befestigten Zustand jeweils durch eine der Bohrungen in der Deckplatte 34, ein Langloch 38 des Häckselmessers 32 und eine Bohrung 56 im Messerhalter 30 erstrecken und deren Gewinde mit einem Gewinde in einer Querstange 66 (vgl. Figur 3) mit Gewindebohrungen zusammenwirkt, die im Hohlraum des Messerhalters 30 zwischen den Schenkeln angeordnet ist.

Die Messerhalter 30 sind an beiden seitlichen Enden mit jeweils einer Bohrung 46 versehen, während die Körper der Häckselmesser 32 an ihren seitlichen Enden mit zwei ersten Bohrungen 42 und zwei zweiten Bohrungen 44 versehen sind. In die Bohrungen 42 bis 46 passen Passstifte 40 hinein.

Die Aufgabe der Passstifte 40 besteht darin, die Häckselmesser 32 bei der Montage an der Häckseltrommel 26 formschlüssig auszurichten. Werden neue Häckselmesser 32 angebracht, wird je ein Passstift 40 in die vorderen Bohrungen 42 der Häckselmesser 32 eingesteckt. Beim Anbringen des Häckselmessers 32 ergibt sich zwangsweise, dass der Passstift 40 auch in die Bohrungen 46 des Messerhalters 30 gelangt, insofern der Passstift 40 nicht bereits anfangs in die Bohrung 46 des Messerhalters 30 gesteckt worden ist. So erhält man eine Vormontage und Ausrichtung der Häckselmesser 32 in einer korrekten Position, wenn die Häckselmesser 32 neu sind, wie in der Figur 3 im mittleren Bereich anhand des Häckselmessers 32 gezeigt. Wenn die Häckselmesser 32 abnutzen, wird ihr Hüllkreisdurchmesser kleiner, wie in der Figur 3 rechts anhand des Häckselmessers 32" gezeigt ist. Man kann in diesem Fall zur Wiederherstellung eines größeren Hüllkreisdurchmessers zur Verbesserung der Luftschaufelwirkung der Häckselmesser 32 eine Neuausrichtung durchführen, bei welcher (nach Abnehmen der Schrauben 36 und Abnehmen der Häckselmesser 32) die Passstifte 40 in die rückwärtigen Bohrungen 44 der Häckselmesser 30 eingesteckt werden. Die sich anschließenden Montageschritte sind wie oben beschrieben. Dadurch erhält man die Situation, wie sie in der Figur 3 links anhand des Häckselmessers 32' gezeigt ist. Die (teilweise abgenutzten) Häckselmesser 32' werden demnach um konstante Wege radial (und etwa tangential zur Drehrichtung der Häckseltrommel 26) nach außen verstellt.

Im Falle einer Überlastung können die aus Kunststoff hergestellten Passstifte 40 nachgeben (abscheren) und die Häckselmesser 32 entlang der Langlöcher 38 nach hinten ausweichen. Die Deckplatten 34 schließen die Langlöcher 38 zu allen Seiten hin ab und verhindern das Eindringen von Verunreinigungen.

Die Bohrungen 42 bis 46 und die Passstifte 40 realisieren nach alledem eine formschlüssige Verbindung zwischen den Messerhaltern 30 und den Häckselmessern 32 zur Vormontage der Häckselmesser 32 und ermöglichen es, zwei unterschiedliche Positionen der Häckselmesser 32 vorauszuwählen. Dadurch kann neben der erwähnten Neuausrichtung der Häckselmesser 32 auch bei Wechsel der Art des zu erntenden Pflanzenmaterials z.B. von Gras auf Mais auf schnelle und einfache Weise ein Umbau der Häckselmesser 32 von den gezeigten beispielsweise auf abgewinkelte Häckselmesser (nicht gezeigt) erfolgen. Die beschriebenen Messerumbauten lassen sich aufgrund der beschriebenen Vorausrichtung der Häckselmesser 32 durch die formschlüssige Verbindung in relativ kurzer Zeit durchführen. Sollte eines der Häckselmesser 32 auszutauschen sein, kann der Passstift 40 entfallen und das neue Häckselmesser 32 stufenlos in eine Position verbracht und dort befestigt werden, die dem Verschleißgrad der anderen Häckselmesser 32 entspricht.

Es sei noch angemerkt, dass man, anstelle je zwei Bohrungen 42, 44 im Häckselmesser 32 vorzusehen, dort nur eine Bohrung und stattdessen jeweils zwei Bohrungen am Messerhalter 30 anbringen könnte, um die unterschiedlichen Positionen der Häckselmesser 32 zu ermöglichen. Bei beiden Varianten könnten auch mehr als zwei Positionen auswählbar sein.

## Patentansprüche

1. Häckseltrommel (26) für einen Feldhäcksler (10), mit einer Anzahl um den Umfang der Häckseltrommel (26) verteilter Messerhalter (30), an denen jeweils ein Häckselmesser (32) wahlweise in einer von zumindest zwei unterschiedlichen, durch formschlüssige Mittel vorgegebenen Positionen fixiert ist, wobei die formschlüssigen Mittel eine Bohrung (42, 44, 46) im Messerhalter (30) und im Häckselmesser (32) umfassen, in welche ein mit dem Häckselmesser (32) und dem Messerhalter (30) gekoppelter Passstift (40) eingeführt ist, das Häckselmesser (32) durch wenigstens zwei Schrauben (36) mit dem Messerhalter (30) verbunden ist, die Schrauben (36) sich durch Langlöcher (38) oder Schlitze im Häckselmesser (32) erstrecken, die am Häckselmesser (32) anliegende Oberfläche des Messerhalters (30) etwa tangential zur Häckseltrommel (26) orientiert ist und der Passstift (40) derart dimensioniert ist, dass er das Häckselmesser (32) während der Montage stabil hält und eine Verschiebung des Häckselmessers (32) während des Anziehens der Schrauben (36) nicht stattfindet, **dadurch gekennzeichnet, dass** der Passstift (40) aus Kunststoff hergestellt und derart dimensioniert ist, dass er im Falle eines Fremdkörperereignisses oder einer anderen Überlastung abschert und somit das Ausweichen der Häckselmesser (32) ermöglicht, um einen Überlastschutz zu gewährleisten.

2. Häckseltrommel (26) nach Anspruch 1, wobei eine Deckplatte (34), an deren Außenseite die Köpfe der Schrauben (36) anliegen, die Langlöcher (38) vollständig abdeckt.

3. Häckseltrommel (26) nach einem der Ansprüche 1 oder 2, wobei an beiden seitlichen Enden des Häckselmessers (32) je ein formschlüssiges Mittel vorhanden ist.

4. Feldhäcksler (10) mit einer Häckseltrommel (26) nach einem der vorhergehenden Ansprüche.

## Claims

1. Chopping drum (26) for a forage harvester (10), having a number of knife holders (30) distributed around the circumference of the chopping drum (26), on each of which a chopping knife (32) is fixed selectively in one of at least two different positions defined by form-fitting means, wherein the form-fitting means enclose a bore (42, 44, 46) in the knife holder (30) and in the chopping knife (32), into which a register pin (40) coupled to the chopping knife (32) and the knife holder (30) has been introduced, the chopping knife (32) is connected to the knife holder (30) by at least two screws (36), the screws (36) extend through oblong holes (38) or slots in the chopping knife (32), the surface of the knife holder (30) bearing on the chopping knife (32) is oriented approximately tangentially to the chopping drum (26) and the register pin (40) is dimensioned such that it holds the chopping knife (32) stable during mounting and no displacement of the chopping knife (32) takes place during the tightening of the screws (36), **characterized in that** the register pin (40) is made of plastic and dimensioned such that it shears off in the event of a foreign object incident or other overload and thus allows the chopping knife (32) to yield so as to ensure overload protection.

2. Chopping drum (26) according to Claim 1, wherein a cover plate (34), against the outer side of which the heads of the screws (36) bear, completely covers the oblong holes (38).

3. Chopping drum (26) according to either of Claims 1 and 2, wherein a form-fitting means is present at each of the two lateral ends of the chopping knife (32) .

4. Forage harvester (10) having a chopping drum (26) according to one of the preceding claims.

## Revendications

1. Tambour de hachoir (26) pour une ramasseuse-hacheuse (10), comprenant une pluralité de supports de couteaux (30) répartis sur la périphérie du tambour de hachoir (26), au niveau desquels est à chaque fois fixé un couteau de hachoir (32) de manière sélective dans l'une parmi au moins deux positions différentes prédéfinies par des moyens d'engagement par correspondance de formes, les moyens d'engagement par correspondance de formes comprenant un alésage (42, 44, 46) dans le support de couteau (30) et dans le couteau de hachoir (32), dans lequel alésage est introduite une goupille d'ajustement (40) accouplée au couteau de hachoir (32) et au support de couteau (30), le couteau de hachoir (32) étant relié par au moins deux vis (36) au support de couteau (30), les vis (36) s'étendant à travers des trous oblongs (38) ou des fentes dans le couteau de hachoir (32), la surface du support de couteau (30) s'appliquant contre le couteau de hachoir (32) étant orientée approximativement tangentiellement par rapport au tambour de hachoir (26) et la goupille d'ajustement (40) étant dimensionnée de telle sorte qu'elle retienne de manière stable le couteau de hachoir (32) pendant le montage et de telle sorte qu'un déplacement du couteau de hachoir (32) n'ait pas lieu pendant le serrage des vis (36),
**caractérisé en ce que** la goupille d'ajustement (40) est fabriquée en plastique et est dimensionnée de telle sorte que dans le cas d'un événement de corps étrangers ou d'une autre surcharge, elle se cisaille et permette ainsi l'écartement du couteau de hachoir (32) afin de garantir une protection contre les surcharges.

2. Tambour de hachoir (26) selon la revendication 1, dans lequel une plaque de recouvrement (34) au niveau du côté extérieur de laquelle s'appliquent les têtes des vis (36) recouvre complètement les trous oblongs (38).

3. Tambour de hachoir (26) selon l'une quelconque des revendications 1 et 2, dans lequel un moyen d'engagement par correspondance de formes est à chaque fois prévu au niveau des deux extrémités latérales du couteau de hachoir (32).

4. Ramasseuse-hacheuse (10) comprenant un tambour de hachoir (26) selon l'une quelconque des revendications précédentes.
